# EUROPÄISCHE PATENTSCHRIFT

(11) **EP 2 877 341 B1**
(45) Veröffentlichungstag und Bekanntmachung des Hinweises auf die Patenterteilung: **15.04.2020**
(21) Anmeldenummer: 13739227.0
(22) Anmeldetag: 19.07.2013
(51) Int. Cl.: B30B 9/24, A22C 17/00

(54) **TRENNEINRICHTUNG ZUM TRENNEN VON STOFFEN UNTERSCHIEDLICHER FLIESSFÄHIGKEIT**
SEPARATION DEVICE FOR SEPARATING SUBSTANCES HAVING DIFFERENT FLOWABILITIES
DISPOSITIF DE SÉPARATION DESTINÉ À SÉPARER DES SUBSTANCES DE FLUIDITÉS DIFFÉRENTES

(30) Priorität: 24.07.2012 DE 102012106708
(43) Veröffentlichungstag der Anmeldung: 03.06.2015
(73) Patentinhaber: Nordischer Maschinenbau Rud. Baader GmbH + Co. KG, 23560 Lübeck (DE)
(72) Erfinder: EVERS, Reinhard, 23617 Stockelsdorf (DE)
(74) Vertreter: Stork Bamberger Patentanwälte PartmbB
(86) Internationale Anmeldenummer: PCT/EP2013/065284
(87) Internationale Veröffentlichungsnummer: WO 2014/016210

(56) Entgegenhaltungen:
- DE-T2-602005 003 660
- JP-U- H02 138 093
- US-A- 2 966 112
- US-A- 5 846 149
- US-A1- 2010 084 319

## Beschreibung

Die vorliegende Erfindung betrifft eine Trenneinrichtung zum Trennen von Stoffen unterschiedlicher Fließfähigkeit gemäß Anspruch 1.

Kettenglieder, Stützketten und Stützvorrichtungen kommen in Trenneinrichtungen, die auch als Separatoren bezeichnet werden, zum Einsatz. Die Trenneinrichtungen bestehen im Allgemeinen aus Hohltrommeln mit perforierten Mantelflächen, gegen die ein Trenngut von außen mittels eines endlosen Pressbandes aus einem elastischen Werkstoff gedrückt wird. Die Bestandteile des Trennguts, die eine größere Fließfähigkeit als die übrigen Bestandteile des Trennguts aufweisen, werden durch die Perforation der Mantelfläche in den inneren Hohlraum gepresst, während die Bestandteile mit geringerer Fließfähigkeit auf der Mantelfläche der Hohltrommel verbleiben und mittels Abstreifer von dieser abgestreift werden. Mittels der Trenneinrichtung lassen sich beispielsweise Fleischbestandteile von Haut, Sehnen, Knochen oder Gräten trennen.

Die Dokumente DE 20 2004 014 365 und US 2010/0084319 A1 aus dem Hause der Anmelderin zeigen eine solche Stützvorrichtung mit einer Stützkette zum Stützen eines Pressbandes. Die bekannte Stützkette umfasst eine Vielzahl von Kettengliedern, die eine mittige Ausnehmung aufweisen, in die die Zähne eines Zahnkettenrades eingreifen. Nachteilig ist, dass aufgrund der mittigen Ausnehmung die Struktur der Kettenglieder geschwächt ist, was je nach Belastungsgrad ggf. zu einer reduzierten Standzeit der Kettenglieder führen kann. Ferner können aufgrund der Zwischenräume zwischen den Kettengliedern der Stützkette gelegentlich Teile des Pressbandes, insbesondere bei großem Pressdruck, in die Zwischenräume zwischen den Kettengliedern gelangen kann, wodurch das Pressband beschädigt werden kann.

Es ist daher Aufgabe der vorliegenden Erfindung, ein Kettenglied hoher Robustheit für eine Stützkette vorzuschlagen, das zugleich eine Beschädigung des Pressbandes zuverlässig verhindert. Des Weiteren besteht die Aufgabe darin, eine entsprechende Stützkette sowie eine entsprechende Stützvorrichtung für eine Trenneinrichtung vorzuschlagen.

Die Aufgabe wird durch ein Kettenglied mit den eingangs genannten Merkmalen dadurch gelöst, dass ein überstehendes Stützelement unter Bildung einer Hinterschneidung an mindestens einer Stirnfläche des Kettenglieds angeordnet ist. Dies bietet auf der einen Seite den Vorteil, dass der Zwischenraum zwischen jeweils zwei der Kettenglieder auf der dem Pressband zugewandten Seite des Kettenglieds auf ein Minimum reduziert ist. Auf der anderen Seite ist der Zwischenraum auf der Ketteninnenseite, also auf der Seite der Innenfläche, geweitet ausgebildet. Anders ausgedrückt ist der Abstand zwischen den Stützelementen jeweils zweier Kettenglieder minimal eingerichtet, während der Abstand zwischen den Stirnflächen der Kettenglieder in Richtung der Innenfläche, also antriebs- bzw. lagerseitig, sich vergrößernd ausgebildet ist. Aufgrund des minimierten Zwischenraumes zwischen den Stützelementen bilden diese eine im Wesentlichen vollständig geschlossene Oberfläche, so dass das Pressband zumindest im Wesentlichen vollflächig auf den Stützflächen der Kettenelemente aufliegt. Einerseits wird so eine gleichmäßige Kräfteverteilung erzielt und andererseits ein unerwünschtes Eindringen des Pressbandes zwischen die Stützelemente und eine damit einhergehende mögliche Beschädigung des Pressbandes zuverlässig vermieden. Zugleich bietet der in Richtung der Innenfläche erweiterte Zwischenraum den erforderlichen Raum, um die Kettenglieder verklemmungsfrei um eine Lager-, Antriebswalze oder dergleichen zu führen.

Eine zweckmäßige Ausgestaltung der Erfindung ist dadurch gekennzeichnet, dass das Stützelement an der Stützfläche absatzfrei angeordnet ist. Auf diese Weise ist die Stützfläche glatt ausgebildet und eingerichtet. Dies gewährleistet einerseits eine vollflächige Auflage des Pressbandes auf der Stützfläche und reduziert andererseits den Verschleiß des Pressbandes bzw. beugt Beschädigungen desselben effektiv vor.

Eine bevorzugte Weiterbildung der Erfindung zeichnet sich dadurch aus, dass das Stützelement mindestens in einem ersten Übergangsbereich zwischen der Stützfläche und der Stirnfläche konvex ausgebildet ist. Anders ausgedrückt ist das Stützelement in dem ersten Übergangsbereich nach außen gewölbt ausgebildet. Die konvexe Form des Stützelements dient der eingangs genannten Minimierung des Abstands zwischen den jeweiligen Enden der Stützbereiche jeweils zweier der Kettenglieder.

Gemäß der bevorzugten Ausbildung der Erfindung ist ein zweiter Übergangsbereich zwischen dem ersten Übergangsbereich und der Innenfläche abgerundet ausgebildet. Mit anderen Worten ist der zweite Übergangsbereich bevorzugt kreisbogenförmig ausgebildet. Die abgerundete Innenfläche vermindert die Reibung zwischen den jeweiligen Stützflächen beim Umlauf der Kettenglieder um ein Zahnkettenrad, da die Position der Kettenglieder aufgrund der abgerundeten Innenflächen unter minimierter Reibung veränderbar ist.

Eine weitere zweckmäßige Ausbildung der Erfindung ist dadurch gekennzeichnet, dass der Konturverlauf der Stirnfläche zwischen dem ersten Übergangsbereich und dem zweiten Übergangsbereich mindestens einen Wendepunkt aufweist. Aufgrund des Wendepunkts weist der Konturverlauf der Stirnfläche mindestens einen Punkt auf, an dem das Krümmungsverhalten von einer Rechtskrümmung in eine Linkskrümmung bzw. andersherum übergeht, wodurch der durch die Stirnflächen jeweils zweier Kettenglieder begrenzte Zwischenraum entsprechend tailliert ausgebildet ist, so dass der Zwischenraum an mindestens einer Seite verengt und zur anderen Seite hin geweitet ausgebildet ist.

Gemäß einer weiteren bevorzugten Ausführungsform umfasst die Innenfläche einen konkaven Anlagebereich. Der konkave Anlagebereich ist damit korrespondierend zum Zahnkettenrad ausgebildet, so dass das Kettenglied auf dem jeweiligen Bereich des Zahnkettenrads vollflächig aufliegt. Dies gewährleistet eine homogene Kraftverteilung über das gesamte Kettenglied, so dass andernfalls auftretende hohe punktförmige Belastungen, die andernsfalls zu einem Bruch des Kettenglieds führen könnten, zuverlässig vermieden werden.

Eine weitere zweckmäßige Ausgestaltung der Erfindung ist dadurch gekennzeichnet, dass die Stützfläche konvex gekrümmt ausgebildet ist. Dies bietet den Vorteil, dass die Stützflächen der Kettenelemente beim Umlauf um ein Zahnkettenrad eine zumindest im Wesentlichen geschlossene und nach außen gewölbte Oberfläche bilden. Auf diese Weise liegt das Pressband auch beim Umlauf der Kettenglieder um das Zahnkettenrad im Wesentlichen vollflächig auf den Stützflächen der Kettenelemente auf.

Gemäß einer weiteren bevorzugten Ausbildung der Erfindung ist das Kettenglied einstückig ausgebildet, so dass einerseits der Fertigungsaufwand für das Kettenglied auf ein Minimum reduziert ist und das Kettenglied anderseits aufgrund der einstückigen Ausführung hohen mechanischen Belastungen widersteht.

Eine vorteilhafte Weiterbildung der Erfindung sieht vor, dass mindestens eine der Walzen der Stützvorrichtung als Zahnkettenrad ausgebildet ist, wobei das Zahnkettenrad mehrere zu den Innenflächen der Kettenglieder korrespondierend ausgebildete Aufnahmebereiche zur zumindest im Wesentlichen flächigen Aufnahme der Kettenglieder umfasst. Auf diese Weise wird eine zumindest im Wesentlichen vollflächige Auflage der Innenflächen der Kettenglieder mit den Aufnahmebereichen des Zahnkettenrades erzielt, so dass eine gleichmäßige Kraftübertragung von den Kettenglieder über die Aufnahmebereiche auf das Zahnkettenrad gewährleistet ist. So werden andernfalls auftretende punktuelle hohe Belastungen der Kettenglieder und/oder des Zahnkettenrads zuverlässig vermieden und damit die Gefahr von Kettengliedbrüchen praktisch ausgeschlossen. Anders ausgedrückt sind die Innenflächen der Kettenglieder an die Geometrie der Aufnahmebereiche bzw. die Aufnahmebereiche an die Geometrie der Innenflächen der Kettenglieder korrespondierend angepasst eingerichtet. Die Aufnahmebereiche sowie die Innenflächen können hinsichtlich ihrer Geometrie beliebig ausgebildet sein, sofern die Korrespondenz zwischen den Aufnahmebereichen mit der Innenfläche der Kettenglieder gegeben ist, die eine im Wesentlichen oder eine vollständige flächige Aufnahme der Kettenglieder erlaubt. Beispielsweise können die Innenflächen konkav ausgebildet sein, während die Aufnahmebereich entsprechend konvex ausgebildet sind oder umgekehrt. Auch können die Aufnahmebereiche und die Innenflächen der Kettenglieder als ebene Flächen ausgebildet sein. In diesem Fall entspricht das Zahnkettenrad im Querschnitt im Wesentlichen einem Vieleck. Die Aufnahmebereiche des Zahnkettenrads sowie die Innenflächen der Kettenglieder sind jedoch nicht ausschließlich auf die vorgenannten Geometrien beschränkt.

Gemäß einer weiteren bevorzugten Ausführung der Erfindung ist die Stützvorrichtung dadurch gekennzeichnet, dass zwischen den Aufnahmebereichen jeweils mindestens ein zum Eingriff in einen Zwischenraum zwischen jeweils zwei der Kettenglieder, der von den jeweiligen Stirnflächen und den Stützelementen begrenzt wird, ausgebildetes Mitnehmerelement angeordnet ist. Mittels des Mitnehmerelements werden Kräfte in oder entgegen der Förderrichtung F über die Stirnflächen zwischen den Kettengliedern und dem Zahnkettenrad übertragen. Auf diese Weise können die Kettenglieder mittels des Zahnkettenrades angetrieben bzw. gebremst werden.

Weitere bevorzugte und/oder zweckmäßige Merkmale und Ausgestaltungen der Erfindung ergeben sich aus den Unteransprüchen und der Beschreibung. Besonders bevorzugte Ausführungsformen werden anhand der beigefügten Zeichnung näher erläutert. Die Zeichnung zeigt:
- Fig. 1: eine schematische Darstellung einer Trenneinrichtung mit einer Stützkette als Bestandteil einer Stützvorrichtung in Seitenansicht,
- Fig. 2: eine Draufsicht auf das Kettenglied,
- Fig. 3: eine perspektivische Darstellung des Kettenglieds,
- Fig. 4: eine Draufsicht auf das Zahnkettenrad mit einem darüber geführten Abschnitt der Stützkette,
- Fig. 5: eine perspektivische Darstellung des Zahnkettenrads und
- Fig. 6: eine perspektivische Darstellung des Zahnkettenrad mit einem darüber geführten Abschnitt der Stützkette.

Die gezeigte Stützkette dient zum Stützen eines Pressbandes in einer Trenneinrichtung zum Trennen von Stoffen unterschiedlicher Fließfähigkeit. Selbstverständlich kann die Stützkette auch in anderen Bereichen und zu anderen Zwecken eingesetzt werden.

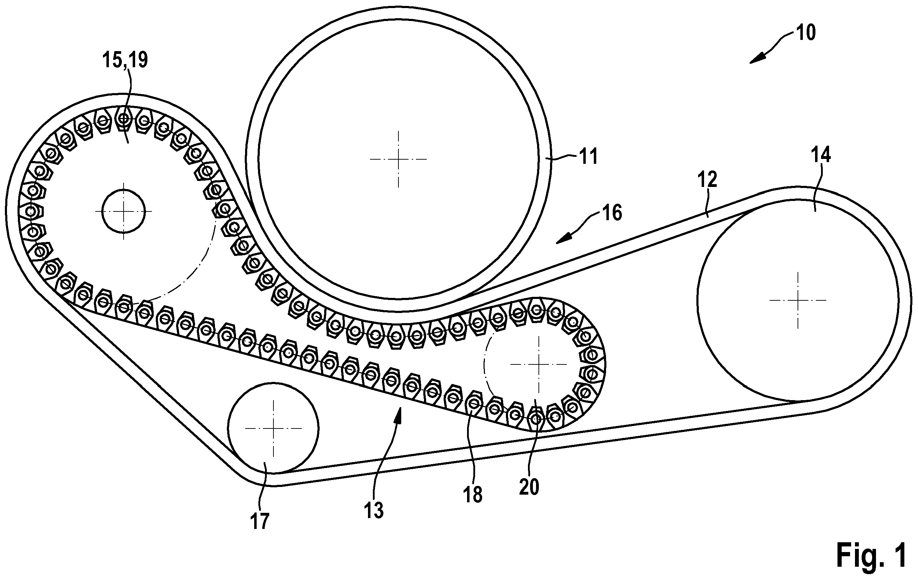

Zum besseren Verständnis wird zunächst anhand der Figur 1 eine Trenneinrichtung 10 beschrieben, in der die erfindungsgemäße und weiter unten im Detail beschriebene Stützkette, Stützvorrichtung bzw. die erfindungsgemäßen Kettenglieder zum Einsatz kommen.

Die dargestellte Trenneinrichtung 10 umfasst eine umlaufend angetriebene Hohltrommel 11, die eine mit Perforationen durchsetzte Mantelfläche aufweist. Die in einem Gestell (in Figur 1 nicht dargestellt) drehbar gelagerte Hohltrommel 11 ist auf einem Teil ihres Umfangs von einem endlosen Quetschband 12 (im Folgenden auch als Pressband bezeichnet) umschlungen, das aus einem elastischen Werkstoff wie beispielsweise Gummi, Polyurethan oder dergleichen besteht, entweder in Form einer einstückigen Bahn oder aber geflochten. Alternativ weist das Pressband eine beliebige andere Bandstruktur auf, beispielsweise ist das Pressband als Sandwich-Band ausgebildet, d.h. das Band besteht auf mehreren übereinander angeordneten Sichten gleichen oder unterschiedlichen Materials. Zwecks Vermeidung von Produktsäcken im Bereich der Umschlingung ist zur Abstützung vom Quetschband 12 eine Stützvorrichtung 13 vorgesehen.

Das Pressband 12 ist über Lagerwalzen 14, 15 geführt, von denen die Walze 15 als angetriebene Andruckwalze ausgebildet ist, mit deren Hilfe das Pressband 12 gegen die Hohltrommel 11 anpressbar ist. Die Walze 14 ist als Spannwalze ausgeführt und derart angeordnet, dass das Pressband 12 mit der Hohltrommel 11 einen Produkt-Einzugskeil 16 bildet. Eine Führungswalze 17 dient als Umlenkwalze und Abstandhalter, um die jeweils rücklaufenden Abschnitte des Pressbandes 12 und der Stützvorrichtung 13 voneinander zu beabstanden. Im oberen Bereich der Peripherie der Hohltrommel 11 befinden sich Abstreifmittel (nicht dargestellt), die eine Abstreifklinge umfassen, die mit der äußeren Mantelfläche der Hohltrommel 11 in Wirkverbindung steht.

Die Stützvorrichtung 13 bzw. das Stützelement ist hier als eine Stützkette 18 ausgebildet, die von Lagerwalzen 19, 20 gehalten wird, wobei die Walze 19 als Antriebswalze ausgeführt ist und die Walze 20 eine Spannwalze ist, mit deren Hilfe die Andruckkraft einstellbar ist, die die Stützkette 18 auf das Pressband 12 ausübt. Besonders günstig ist es hierbei, wenn die Walze 20 mit der Walze 19 in einer derartigen Wirkverbindung steht, dass die Andruckkraft der Stützkette 18 an das Pressband 12 durch Bewegen der Walze 20 nachgeregelt wird, etwa unter Verwendung eines hydraulischen Systems oder einer bzw. mehrerer Federn. Hierdurch ist es möglich, dass, sobald beispielsweise das Pressband 12 infolge des mechanischen Widerstands des Pressgutes von der Hohltrommel 11 abgedrückt wird, die Walze 20 in einer auf die Hohltrommel 11 gerichteten Bewegung nachgefahren wird, wodurch die Andruckkraft der Stützkette 18 an das Pressband 12 insgesamt konstant bleibt. Die Walze 15 dient in dieser Ausführungsform sowohl dem Pressband 12 als auch der Stützkette 18 als Antriebswalze und ist daher mit der Walze 19 identisch. Der synchrone Umlauf des Pressbandes 12 und der Stützkette 18 innerhalb des Umschlingungsbereichs wird dadurch erzielt, dass das Pressband 12 bei der Walze 15, 19 eng an der nach außen gerichteten Seite der Stützkette 18 anliegt, wodurch das Pressband 12 und die Stützkette 18 allein aufgrund von Haftreibung mit derselben Umfangsgeschwindigkeit angetrieben werden und daher im Bereich der Umschlingung gleich schnell umlaufen.

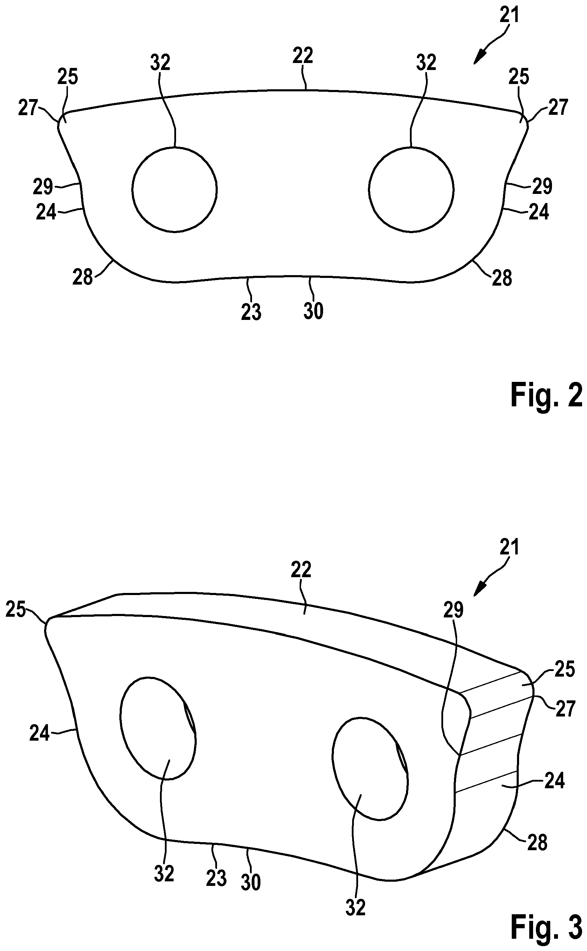

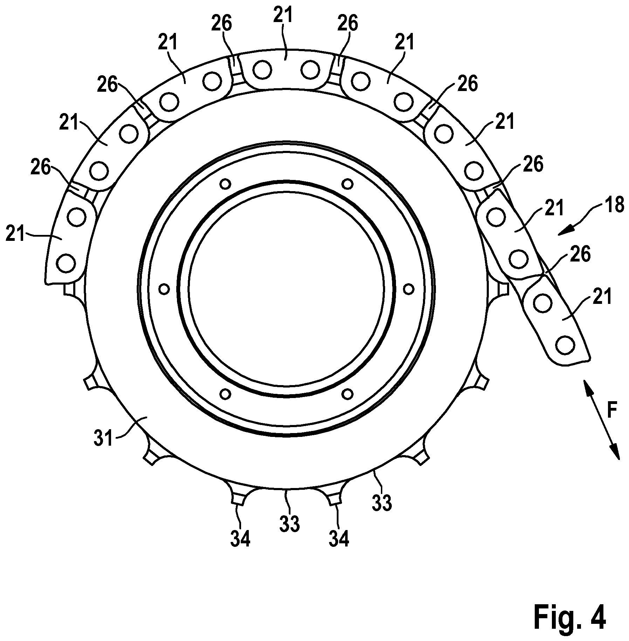

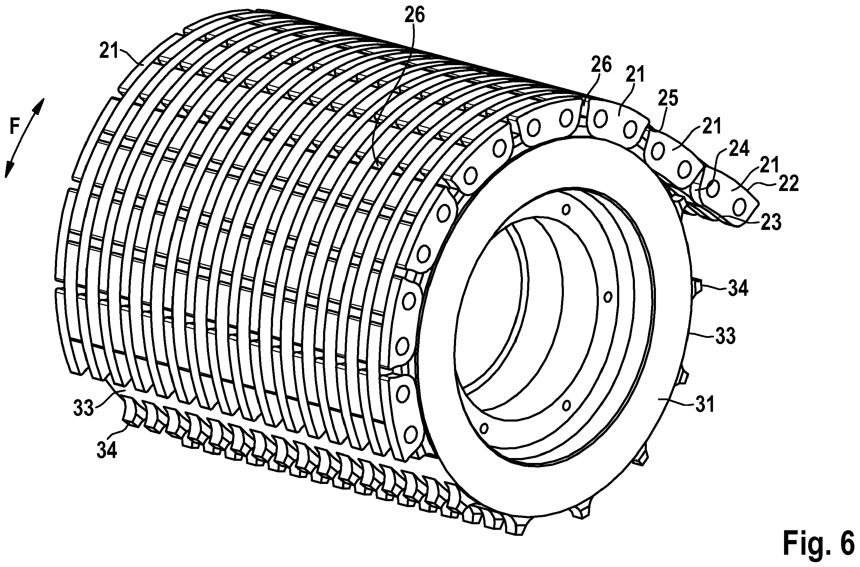

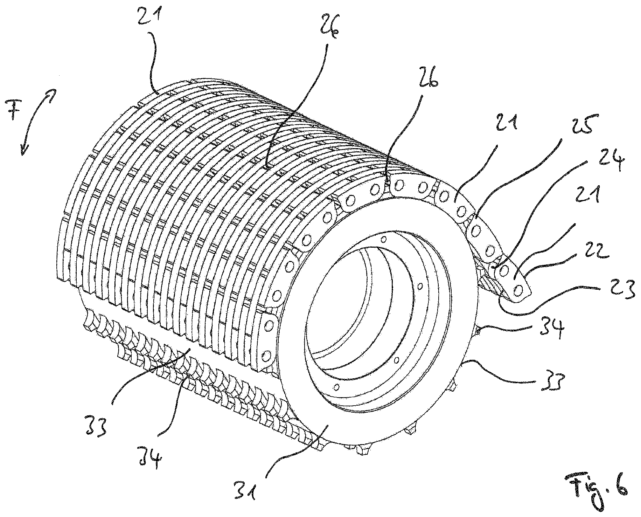

Die Figuren 2 und 3 und zeigen ein erfindungsgemäßes Kettenglied 21 der aus einer Vielzahl von Kettengliedern 21 gebildeten Stützkette 18 jeweils in einer Draufsicht bzw. in einer perspektivischen Darstellung. Das Kettenglied 21 umfasst eine Stützfläche 22 und eine der Stützfläche 22 gegenüberliegende Innenfläche 23. Die Stützflächen 22 der Kettenglieder 21 der Stützkette 18 sind jeweils in Richtung des Pressbandes 12 ausgerichtet angeordnet und bilden so diejenige Seite der Stützkette 18, die das Pressband 12 stützend gegen die Hohltrommel 11 presst. Die Innenflächen 23 der Kettenglieder 21 sind jeweils lager- bzw. antriebsseitig orientiert, d.h. derart angeordnet und ausgerichtet, dass diese unmittelbar mit den jeweiligen Lagerwalzen 19, 20 in Kontakt kommen. An mindestens einer Stirnfläche 24 des Kettenglieds 21 ist ein überstehendes Stützelement 25 unter Bildung einer Hinterschneidung angeordnet. Mit anderen Worten ist die Stützfläche 22 verlängert ausgebildet, indem das Stützelement 25 die Stirnfläche 24 überragt. Mittels der Stützelemente 25 ist der Zwischenraum 26 (vgl. Fig. 4 und 6) auf der Seite der Stützfläche 22 zwischen jeweils zwei der Kettenglieder 21 auf ein Minimum reduziert, während sich der Zwischenraum 26 zur Seite der Innenfläche 23 hin aufweitet. Auf diese Weise bilden die Stützflächen 22 mit den Stützelementen 25 eine weitestgehend geschlossene Oberfläche, die einerseits einen über die Fläche gleichmäßig verteilten Andruck des Pressbandes 12 und damit eine flächige Anlage am Pressband 12 bewirkt und andererseits ein Eindringen von Abschnitten des Pressbandes 12 in den Zwischenraum 26 zuverlässig verhindert.

Bevorzugt ist das Stützelement 25 an der Stützfläche 22 absatzfrei angeordnet, so dass die Stützfläche 22 und das Stützelement 25 eine glatte Oberfläche definieren. Unter "glatter Oberfläche" sind nicht nur ebene, sondern auch gekrümmte Oberflächen zu verstehen.

Vorzugsweise ist das Stützelement 25 in einem ersten Übergangsbereich 27 konvex ausgebildet. Der Übergangsbereich 27 bezeichnet den Bereich zwischen der Stützfläche 22 und der Stirnfläche 24, wobei der Übergangsbereich jeweils Teile der Stützfläche 22 und der Stirnfläche 24 umfasst. Besonders bevorzugt ist der Übergangsbereich 27 zumindest auf einem Teilabschnitt kreisbogenförmig ausgebildet. Die vorliegende Erfindung ist jedoch nicht auf derartige kreisbogenförmige Teilabschnitte beschränkt, vielmehr kann der Übergangsbereich 27 weitere konvexe Formgebungen aufweisen. Der erste Übergangsbereich 27 kann alternativ mehrere konvexe Bereiche umfassen.

Besonders bevorzugt ist zwischen dem ersten Übergangsbereich 27 und der Innenfläche 23 ein zweiter Übergangsbereich 28 abgerundet ausgebildet. Beispielsweise ist der Übergangsbereich 28, wie in der Zeichnung gezeigt, kreisbogenförmig ausgebildet. Alternativ ist der zweite Übergangsbereich 28 konkav, also nach innen gekrümmt ausgebildet.

Gemäß einer vorteilhaften Weiterbildung der Erfindung weist der Konturverlauf der Stirnfläche 24 zwischen dem ersten Übergangsbereich 27 und dem zweiten Übergangsbereich 28 einen Wendepunkt 29 auf. Der Wendepunkt 29 definiert damit jenen Punkt des Kontorverlaufs der Stirnfläche 24, an dem das Vorzeichen der Krümmung von negativ auf positiv bzw. von positiv auf negativ wechselt. Der Konturverlauf kann ggf. mehrere der Wendepunkte 29 aufweisen.

Vorteilhafter Weise umfasst die Innenfläche 23 einen konkaven Anlagebereich 30. Besonders bevorzugt ist der konkave Anlagebereich kreisbogenförmig ausgebildet und weist insbesondere einen Krümmungsradius auf, der dem Krümmungsradius eines Zahnkettenrads 31 (vgl. Figuren 4 bis 6) entspricht. Auf diese Weise wird eine möglichst vollflächige Auflage des Anlagebereichs 30 auf jeweiligen Abschnitt des Zahnkettenrads 31 erzielt.

Bevorzugt ist die Stützfläche 22 konvex gekrümmt ausgebildet, besonders bevorzugt kreisbogenförmig mit konstantem Krümmungsradius. So bilden die Stützflächen 22 der Kettenglieder 21 beim Umlauf um eine der Lagerwalzen 14, 15, 19, 20 eine im Wesentlichen zylindrischen Oberfläche.

Besonders bevorzugt ist das Kettenglied 21 einstückig ausgebildet. Das Kettenglied 21 ist beispielsweise aus einem Stück gefertigt bzw. aus dem Vollen gefräst. Das Kettenglied 21 ist weiter bevorzugt aus einem elastischen CrNi-Stahl hergestellt.

Vorzugweise weist das Kettenglied 21 mindestens zwei Bohrungen 32 auf. Mittels der Bohrungen 32 sind die Kettenglieder 21 über Kettenstifte (nicht gezeigt) gelenkig miteinander verbindbar ausgebildet und eingerichtet. Besonders vorteilhaft sind die Kettenglieder 21 - wie in der Figur 6 dargestellt - verschachtelt bzw. versetzt zueinander auf den Kettenstiften derart angeordnet, dass eine Verbindung zu den benachbarten Kettengliedern hergestellt ist.

Bevorzugt ist das Kettenglied 21, wie in den Figuren 2 und 3 gezeigt, symmetrisch bezüglich einer - in der Zeichnung nicht gezeigten - mittig zwischen den Bohrungen 32 verlaufenden Symmetrieachse ausgebildet. Alternativ ist das Kettenglied 21 asymmetrisch ausgebildet. Beispielsweise umfasst das Kettenglied 21 nur eines der Stützelemente 25 an einer Seite der Stützfläche 22.

Die Figuren 4 und 6 zeigen einen Ausschnitt der erfindungsgemäßen Stützkette 18 jeweils als Draufsicht auf das Zahnkettenrad mit einem darüber geführten Abschnitt der Stützkette 18 bzw. in perspektivischer Darstellung. Die Stützkette 18 ist, wie zuvor beschrieben, als eine Gelenkkette ausgebildet. Hierzu sind mehrere der zuvor beschriebenen Kettenglieder 21 gelenkig miteinander verbunden, indem die Kettenglieder 21 auf quer zur Förderrichtung F verlaufenden - in der Zeichnung nicht gezeigten - Kettenstiften aufgefädelt sind.

Die eingangs in Verbindung mit der Figur 1 beschriebene Stützvorrichtung zeichnet sich ferner dadurch aus, dass diese die erfindungsgemäße Stützkette 18 umfasst.

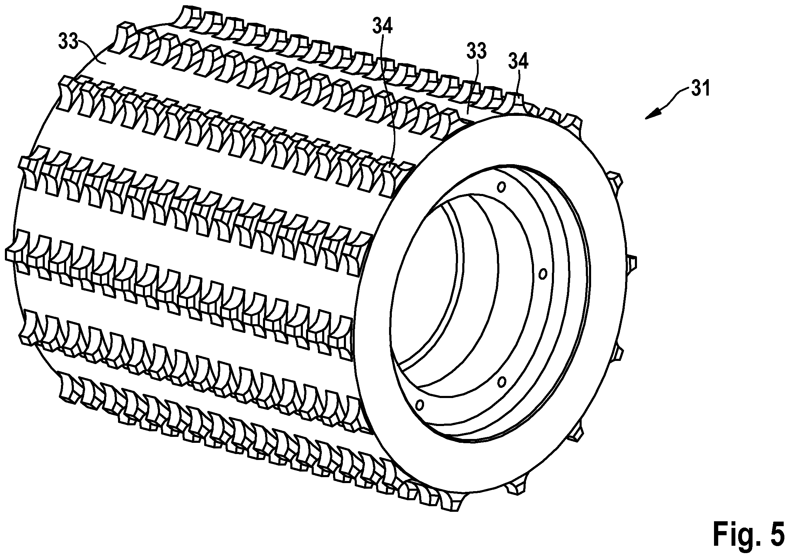

Vorteilhafter Weise ist mindestens eine der Walzen 15, 19, 20 als Zahnkettenrad 31 ausgebildet. Das Zahnkettenrad 31 umfasst mehrere zu den Innenflächen 23 der Kettenglieder 21 korrespondierend ausgebildete Aufnahmebereiche 33, von denen der besseren Übersichtlichkeit halber in der Figur 5 nur zwei exemplarisch mit Bezugsziffern gekennzeichnet sind. Die Aufnahmebereiche 33 dienen der flächen Aufnahme der Kettenglieder 21 bzw. derer Innenflächen 23. Anders ausgedrückt greifen die Kettenglieder 21 in die Aufnahmebereiche 33 zumindest im Wesentlichen formschlüssig ein.

Bevorzugt ist zwischen den Aufnahmebereichen 33 jeweils ein Mitnehmerelement 34 angeordnet, von denen aus Gründen der Übersichtlichkeit wiederum nur jeweils zwei in der Figur 4 und 5 mit Bezugszeichen versehen sind. Die Mitnehmerelemente 34 sind zum Eingriff in den jeweiligen Zwischenraum 26 zwischen jeweils zwei der Kettenglieder 21 ausgebildet und eingerichtet. Besonders bevorzugt sind die Kettenglieder 21 und die Mitnehmerelemente 34 derart korrespondierend zueinander ausgebildet, dass der Eingriff unter Formschluss bzw. unter weitestgehendem Formschluss erfolgt. Hierzu ist das Mitnehmerelement 34 weiter bevorzugt korrespondierend zu den den Zwischenraum 26 bildenden Stirnflächen 24 ausgebildet und eingerichtet.

## Patentansprüche

1. Trenneinrichtung zum Trennen von Stoffen unterschiedlicher Fließfähigkeit mit einer Stützvorrichtung zum Stützen eines Pressbandes (12) in der Trenneinrichtung (10), umfassend ein Gehäuse mit Seitenwänden, eine umlaufend angetriebene Hohltrommel (11) mit perforierter Mantelfläche, ein von außen an diese unter Umschlingung eines Teils des Umfangs der Hohltrommel (11) anpressbares endloses Pressband (12), einen Produkt-Einzugskeil (16), Abstreifmittel zum Abstreifen des Pressgutes an der Hohltrommel (11), wobei das endlose Pressband (12) mittels wenigstens zweier Walzen (14, 19) gelagert ist, von denen eine getrennt durch das Pressband (12) elastisch gegen die Hohltrommel (11) andrückbar ausgebildet ist, die Stützvorrichtung umfassend eine Stützkette (18),
wobei die Stützkette (18) eine Gelenkkette ist, die einzelne miteinander gelenkig verbundene Kettenglieder (21) aufweist, und wobei
die Kettenglieder (21) auf quer zur Förderrichtung F verlaufenden Kettenstiften aufgefädelt sind,
und das Kettenglied (21) eine Stützfläche (22) und eine der Stützfläche (22) gegenüberliegende Innenfläche (23) umfasst, **dadurch gekennzeichnet, dass** ein überstehendes Stützelement (25) unter Bildung einer Hinterschneidung an mindestens einer Stirnfläche (24) des Kettenglieds (21) angeordnet ist und
die Innenfläche (23) einen konkaven Anlagebereich (30) umfasst.

2. Trenneinrichtung nach Anspruch 1, **dadurch gekennzeichnet, dass** das Stützelement (25) an der Stützfläche (22) absatzfrei angeordnet ist.

3. Trenneinrichtung nach einem der Ansprüche 1 oder 2, **dadurch gekennzeichnet, dass** das Stützelement (25) mindestens in einem ersten Übergangsbereich (27) zwischen der Stützfläche (22) und der Stirnfläche (24) konvex ausgebildet ist.

4. Trenneinrichtung nach Anspruch 3, **dadurch gekennzeichnet, dass** mindestens ein zweiter Übergangsbereich (28) zwischen dem ersten Übergangsbereich (27) und der Innenfläche (23) abgerundet ausgebildet ist.

5. Trenneinrichtung nach Anspruch 4, **dadurch gekennzeichnet, dass** der Konturverlauf der Stirnfläche (24) zwischen dem ersten Übergangsbereich (27) und dem zweiten Übergangsbereich (28) mindestens einen Wendepunkt (29) aufweist.

6. Trenneinrichtung nach einem der vorangehenden Ansprüche **dadurch gekennzeichnet, dass** die Stützfläche (22) konvex gekrümmt ausgebildet ist.

7. Trenneinrichtung nach einem der vorangehenden Ansprüche **dadurch gekennzeichnet, dass** das Kettenglied (21) einstückig ausgebildet ist.

8. Trenneinrichtung nach einem der vorangehenden Ansprüche **dadurch gekennzeichnet, dass** das Kettenglied (21) mindestens zwei Bohrungen (32) zur Aufnahme eines die Kettenglieder (21) jeweils gelenkig miteinander verbindenden Kettenstifts aufweist.

9. Trenneinrichtung nach einem der Ansprüche 1 bis 8, **dadurch gekennzeichnet, dass** mindestens eine der Walzen (19, 20) als Zahnkettenrad (31) ausgebildet ist, wobei das Zahnkettenrad (31) mehrere zu den Innenflächen (23) der Kettenglieder (21) korrespondierend ausgebildete Aufnahmebereiche (33) zur zumindest im Wesentlichen flächigen Aufnahme der Kettenglieder (21) umfasst.

10. Trenneinrichtung nach Anspruch 9, **dadurch gekennzeichnet, dass** zwischen den Aufnahmebereichen (33) jeweils mindestens ein zum Eingriff in einen Zwischenraum (26) zwischen jeweils zwei der Kettenglieder (21), der von den jeweiligen Stirnflächen (24) und den Stützelementen (25) begrenzt wird, ausgebildetes Mitnehmerelement (34) angeordnet ist.

11. Trenneinrichtung nach Anspruch 10, **dadurch gekennzeichnet, dass** das Mitnehmerelement korrespondierend zu den den Zwischenraum bildenden Stirnflächen ausgebildet ist.

## Claims

1. Separating device for separating materials of different flowability, with a support apparatus for supporting a compression belt (12) in the separating device (10), comprising a housing with side walls, a rotationally driven hollow drum (11) with a perforated circumferential surface, a continuous compression belt (12) which can be pressed from outside onto said circumferential surface by winding around a portion of the circumference of the hollow drum (11), a product intake wedge (16), stripping means for stripping the compressed material on the hollow drum (11), the continuous compression belt (12) being supported by means of at least two rollers (14, 19), one of which is designed to be pressed separately by the compression belt (12) elastically against the hollow drum (11), the support apparatus comprising a support chain (18),
wherein the support chain (18) is an articulated chain which has individual chain links (21) connected to each other in an articulated manner, and wherein
the chain links (21) are threaded onto chain pins extending transverse to the conveying direction F,
and the chain link (21) has a support surface (22) and an inner surface (23) opposite said support surface (22),
**characterised in that**
a protruding support element (25) is arranged on at least one end face (24) of the chain link (21) so as to form an undercut and the inner surface (23) comprises a concave contact region (30).

2. Separating device according to claim 1, **characterised in that** the support element (25) is arranged step-free on the support surface (22).

3. Separating device according to any one of claims 1 or 2, **characterised in that** the support element (25) is convex in at least a first transition region (27) between the support surface (22) and the end face (24).

4. Separating device according to claim 3, **characterised in that** at least one second transition region (28) between the first transition region (27) and the inner surface (23) is rounded.

5. Separating device according to claim 4, **characterised in that** the contour of the end face (24) has at least one point of inflexion (29) between the first transition region (27) and the second transition region (28).

6. Separating device according to any one of the preceding claims, **characterised in that** the support surface (22) is convexly curved.

7. Separating device according to any one of the preceding claims, **characterised in that** the chain link (21) is formed in one piece.

8. Separating device according to any one of the preceding claims, **characterised in that** the chain link (21) has at least two holes (32) for receiving one of the chain pins, each connecting the chain links (21) to each other in an articulated manner.

9. Separating device according to any one of claims 1 to 8, **characterised in that** at least one of the rollers (19, 20) is designed as a sprocket wheel (31), wherein the sprocket wheel (31) comprises a plurality of reception regions (33) designed correspondingly to the inner surfaces (23) of the chain links (21) for receiving the chain links (21) at least essentially flat.

10. Separating device according to claim 9, **characterised in that**, arranged between the reception regions (33), there is in each case at least one driver element (34) arranged for engaging in a gap (26) between every two of the chain links (21), said gap being limited by the respective end faces (24) and the support elements (25).

11. Separating device according to claim 10, **characterised in that** the driver element is designed correspondingly to the end faces forming the gap.

## Revendications

1. Dispositif de séparation destiné à séparer des substances de fluidités différentes, doté d'un moyen d'appui destiné à servir d'appui à une courroie à pression (12) dans ledit dispositif de séparation (10),
comprenant un boîtier doté de parois latérales, un tambour creux (11) entraîné en révolution et doté d'une enveloppe perforée, une courroie à pression (12) sans fin, qui peut être compressée de l'extérieur sur ladite enveloppe en faisant une boucle autour d'une partie de la circonférence dudit tambour creux (11), une cale d'introduction de produit (16), des moyens racleurs pour enlever le produit compressé du tambour creux (11), la courroie à pression (12) sans fin étant agencée à l'aide d'au moins deux rouleaux (14, 19), dont l'un est réalisé pouvant être appuyé, de manière séparée, par la courroie à pression (12), de manière élastique contre le tambour creux (11), le moyen d'appui comprenant une chaîne d'appui (18),
ladite chaîne d'appui (18) étant une chaîne articulée qui présente des maillons de chaîne (21) individuels reliés les uns aux autres de manière articulée, et
lesdits maillons de chaîne (21) étant enfilés sur des broches de chaîne transversales au sens de marche F,
et le maillon de chaîne (21) comprenant une surface d'appui (22) et une face intérieure (23) en vis-à-vis de la surface d'appui (22), **caractérisé en ce qu'**
un élément d'appui (25) en saillie est agencé, par formation d'une contre-dépouille, sur au moins une face antérieure (24) du maillon de chaîne (21), et
la face intérieure (23) comprend une zone de contact (30) concave.

2. Dispositif de séparation selon la revendication 1, **caractérisé en ce que** l'élément d'appui (25) est agencé sans palier sur la surface d'appui (22).

3. Dispositif de séparation selon l'une quelconque des revendications 1 ou 2, **caractérisé en ce que** l'élément d'appui (25) est réalisé convexe au moins dans une première zone de transition (27) entre la surface d'appui (22) et la face antérieure (24).

4. Dispositif de séparation selon la revendication 3, **caractérisé en ce qu'**au moins une deuxième zone de transition (28) est réalisée arrondie entre la première zone de transition (27) et la face intérieure (23).

5. Dispositif de séparation selon la revendication 4, **caractérisé en ce que** le contour de la face antérieure (24) présente, entre la première zone de transition (27) et la deuxième zone de transition (28), au moins un tournant (29).

6. Dispositif de séparation selon l'une quelconque des revendications précédentes, **caractérisé en ce que** la surface d'appui (22) est réalisée incurvée de manière convexe.

7. Dispositif de séparation selon l'une quelconque des revendications précédentes, **caractérisé en ce que** le maillon de chaîne (21) est réalisé d'un seul tenant.

8. Dispositif de séparation selon l'une quelconque des revendications précédentes, **caractérisé en ce que** le maillon de chaîne (21) présente au moins deux trous de perçage (32) destinés à recevoir une broche de chaîne reliant les maillons de chaînes (21), chacun de manière articulée, les uns aux autres.

9. Dispositif de séparation selon l'une quelconque des revendications 1 à 8, **caractérisé en ce qu'**au moins un des rouleaux (19, 20) est réalisé en tant que pignon (31), ledit pignon (31) comprenant plusieurs zones de réception (33) réalisées correspondantes aux faces intérieures (23) des maillons de chaîne (21), destinées au moins sensiblement à recevoir de manière plane les maillons de chaîne (21).

10. Dispositif de séparation selon la revendication 9, **caractérisé en ce qu'**est agencé respectivement entre les zones de réception (33), au moins un élément entraîneur (34) réalisé pour intervenir dans un espace intermédiaire (26) entre respectivement deux des maillons de chaîne (21), lequel espace intermédiaire est délimité par les faces antérieures (24) respectives et les éléments d'appui (25).

11. Dispositif de séparation selon la revendication 10, **caractérisé en ce que** l'élément entraîneur est réalisé de manière à correspondre aux faces antérieures formant l'espace intermédiaire.
